# FASCICULE DE BREVET EUROPEEN

(11) **EP 0 470 026 B1**
(45) Date de publication et mention de la délivrance du brevet: **18.11.1993**
(21) Numéro de dépôt: 91450008.7
(22) Date de dépôt: 01.08.1991
(51) Int. Cl.: A01B 9/00, A01B 33/02

(54) **Charrue rotative polyvalente**
Mehrzweckscheibenpflug
Multi-purpose rotary plough

(30) Priorité: 01.08.1990 FR 9010045
(43) Date de publication de la demande: 05.02.1992
(73) Titulaire: Berges, Robert, F-82340 Auvillar (FR)
(72) Inventeur: Berges, Robert, F-82340 Auvillar (FR)
(74) Mandataire: Thébault, Jean-Louis

(56) Documents cités:
- FR-A- 1 394 093
- FR-A- 1 560 619
- FR-A- 2 184 578
- FR-A- 2 287 838
- FR-A- 2 342 012
- GB-A- 885 938
- US-A- 1 951 701
- US-A- 2 821 173

## Description

La présente invention se rapporte à une charrue rotative polyvalente et vise à proposer une machine agricole et forestière capable de broyer, défricher, sous-soler et travailler le sol de diverses manières, grâce à sa conception et à ses possiblités d'adaptation.

On connaît déjà diverses machines de travail du sol, telles que charrues rotatives, charrues réversibles à socs, charrues à socs à labour torique, charrues forestières à disques bombés, pulvériseurs off-set (en V) ou cover-crop tandem en X, "cultirotor", "rotavator", qui sont toutes spécialisées dans un type de travail donné et, qui, outre leur inadaptation fonctionnelle à d'autres tâches, présentent néanmoins, pour la plupart, des inconvénients dans leur utilisation normale. FR-A-1560619 décrit une machine selon le préambule de la revendication 1.

La présente invention a pour but de proposer une nouvelle machine à la fois réellement polyvalente et susceptible, pour chaque type de travail qu'elle est appelée à effectuer, de le faire plus efficacement et commodément que les diverses machines plus ou moins spécialisées connues à ce jour.

A cet effet, l'invention a pour objet une charrue rotative polyvalente correspondant à la revendication 1, comprenant un arbre ou rotor porte-outils mû à partir de l'engin tracteur, disposé transversalement à la direction d'avancement dudit engin, dans laquelle les outils sont constitués par des organes tranchants ou à pointes montés amovibles à l'extrémité de bras réglables en position, rapportés sur ledit rotor porte-outils et constitués par des tiges montées rotatives autour de leur axe dans des moyeux solidaires du rotor à des fins de réversibilité de la charrue, lesdites tiges portant un filetage coopérant avec un arbre-vis coaxial au rotor, dont le déplacement est commandé par un dispositif approprié constitué par la fixation de l'une des extrémités de l'arbre sur un flasque mobile à l'aide de vérins appropriés, suivant une direction parallèle à l'arbre du rotor, le châssis de la charrue étant télescopique.

Une telle conception permet d'adapter la machine de l'invention à de très diverses tâches en montant comme outils des disques bombés à périphérie crenelée, ronde ou étoilée ou des disques à organes tranchants ou à pointes carburées ou céramiques rapportas, dont le centre peut se trouver décalé, en groupant les bras porte-outils sur un ou plusieurs moyeux enfilés sur l'arbre du rotor, en prévoyant la possibilité sur chaque moyeu de modifier l'orientation des bras porte-outils en sorte notamment de rendre, suivant une caractéristique essentielle de l'invention, la machine réversible, en alignant les outils autour du rotor en hélice, etc...

On va décrire maintenant divers modes de réalisation de la machine selon l'invention, description donnée à titre d'exemple uniquement et en regard des dessins annexés sur lesquels :
- Figure 1 est une vue schématique d'une charrue rotative réversible à châssis téléscopique conforme à l'invention ;
- Figure 2 est une vue en coupe verticale transversale d'un rotor de charrue du type de la figure 1 ;
- Figure 3 illustre un mode de réalisation préféré du système de réversibilité des outils du rotor d'une charrue selon l'invention;
- Figure 4 représente un mode de montage escamotable d'un outil sur son bras porte-outil ;

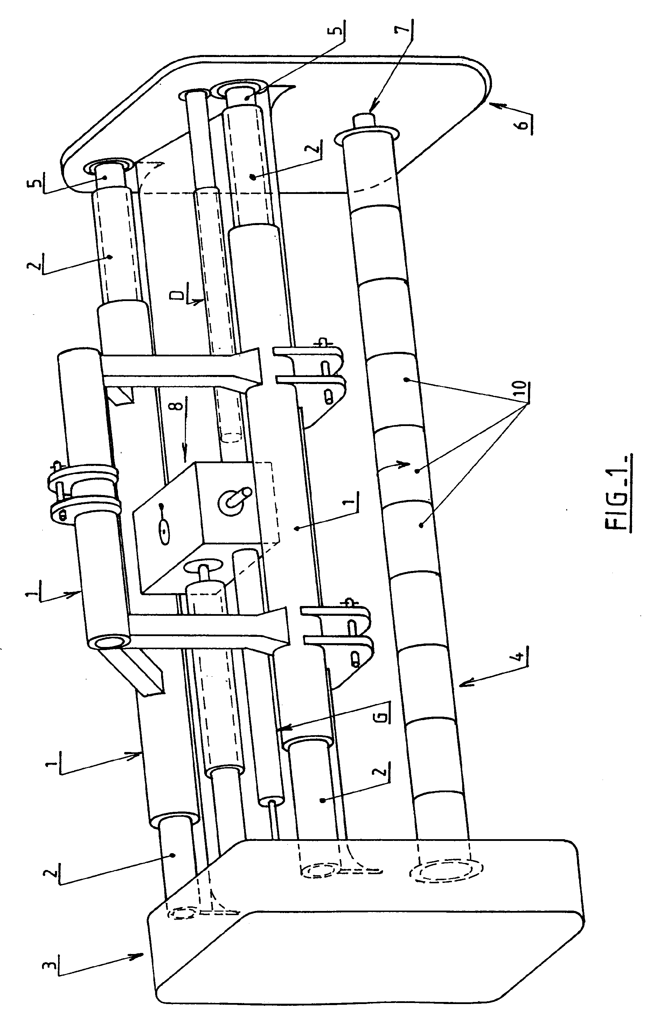

Sur la figure 1 on a représenté une charrue conforme à l'invention destinée à être attelée à l'arrière d'un tracteur (non représenté) à la manière connue.

La charrue 1 comporte un châssis semi-porté indéformable (triangulé) comprenant une partie fixe 1 fixée au tracteur par un attelage trois points et comprenant deux tubes horizontaux parallèles dans lesquels peuvent coulisser, d'un côté, deux tubes 2 dont une extrémité est solidaire d'un carter latéral 3 regroupant les organes d'entraînement en rotation d'un rotor 4.

A l'intérieur des tubes 2 peuvent coulisser, du côté opposé au carter 3, deux tubes 5 solidaires à leur extrémité d'un flasque 6 supportant l'autre extrémité du rotor 4. Le rotor 4 présente un axe 7 perpendiculaire à la direction de déplacement, l'orientation de l'axe 7 pouvant être modifiée de quelques degrés en allongeant ou racourcissant un bras de relevage de la partie fixe 1. Le rotor 4 est entraîné en rotation à la manière connue à partir de la prise de force du tracteur et par l'intermédiaire d'une boîte de transmission 8 entraînant le rotor par l'une de ses extrémités (carter 3).

Des vérins D et G interposés entre le boîtier 8 et le flasque 6 et le carter 3 permettent de faire varier d'un côté et/ou de l'autre de la partie fixe 1 la largeur de la charrue et, ainsi, d'adapter sur la charrue un rotor 4 de longueur approprié au travail à exécuter.

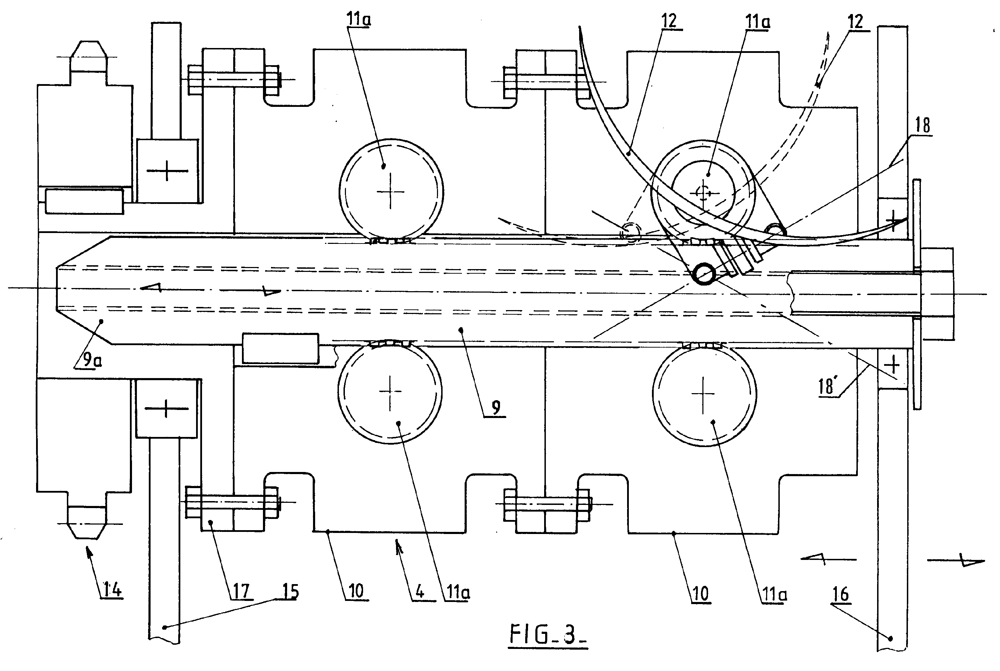

Ces vérins D,G permettent également la réversibilité conformément à l'invention de la charrue en assurant la rotation appropriée des disques ou socs portés par le rotor 4, grâce à un dispositif de commande approprié illustré par la figure 3.

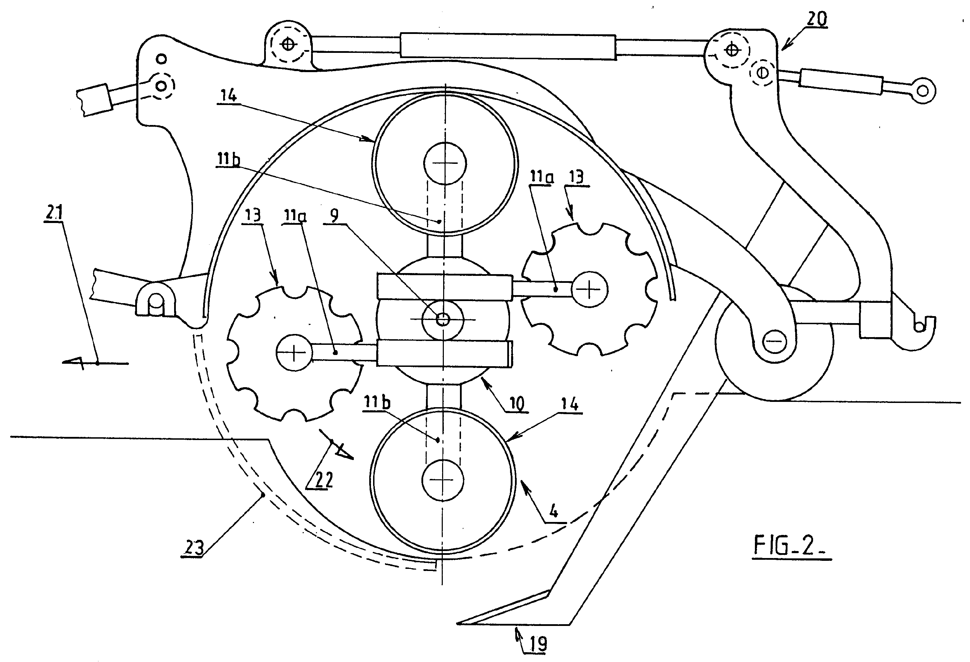

La figure 2 représente plus en détails, suivant une vue en coupe transversale, un rotor 4 du type de celui schématisé sur la figure 1 et monté sur un châssis simplifié. Le rotor 4 comporte, conformément à l'invention, un arbre porte-outils 9 sur lequel sont enfilés un certain nombre de moyeux 10 juxtaposés portant chacun un certain nombre de bras rayonnants 11a, 11b portant eux-même chacun, de préférence de manière escamotable, un outil 12 tel qu'un disque bombé monté rotatif ou un soc à double bec de labour torique, par exemple. Plus précisément, dans le mode de réalisation de la figure 2, le rotor 4 comporte, sur chaque moyeu 10, deux disques bombés à bords crenelés 13 montés diamétralement opposés par rapport à l'arbre 9 et deux disques lisses ou coutres 14 positionnés d'équerre avec les disques bombés 13.

Les disques bombés 13 sont montés rotatifs sur des bras constitués par des tiges 11a parallèles, orthogonaux à l'arbre 9 et eux-mêmes montés rotatifs autour de leur axe. Les coutres 14 sont montés rotatifs sur des bras 11b fixés rigidement, mais de manière amovible, sur le moyeu 10.

La figure 3 illustre un mode de réalisation préféré d'un moyeu 10 du type des figures 1 et 2 permettant, conformément à l'invention, d'orienter les disques bombés 13.

Sur la figure 3 on a représenté un rotor 4 dont la longueur est adaptable à l'écartement entre un premier flasque 15 de la charrue (côté transmission 14) et le flasque opposé 16 correspondant au flasque 6 de la figure 1, articulé sur le châssis par un système à vérins du type schématisé en figure 1 par exemple. Le rotor comporte un arbre à vis crémaillère 9a à extrémité légèrement conique pour un emmanchement facile dans une pièce d'entraînement 17 dans laquelle il peut coulisser, l'autre extrémité de l'arbre 9 étant solidaire du flasque 16.

L'alignement de moyeux 10 (deux dans le mode de réalisation de la figure 3) est solidarisé seulement à une extrémité de la pièce d'entraînement 17.

L'arbre 9 en coulissant de quelques centimètres dans l'alignement des moyeux 10, sous l'action de l'un et/ou l'autre des vérins D,G rapprochant ou éloignant le flasque 16 du flasque fixe 15, assure la réversibilité des disques ou socs 12 (ou 13,14) par rotation des tiges 11a dans les moyeux 10, dont le nombre peut être quelconque.

Les angles d'attaque des disques ou socs 12 (ou 13,14) peuvent être réglés de manière très précise.

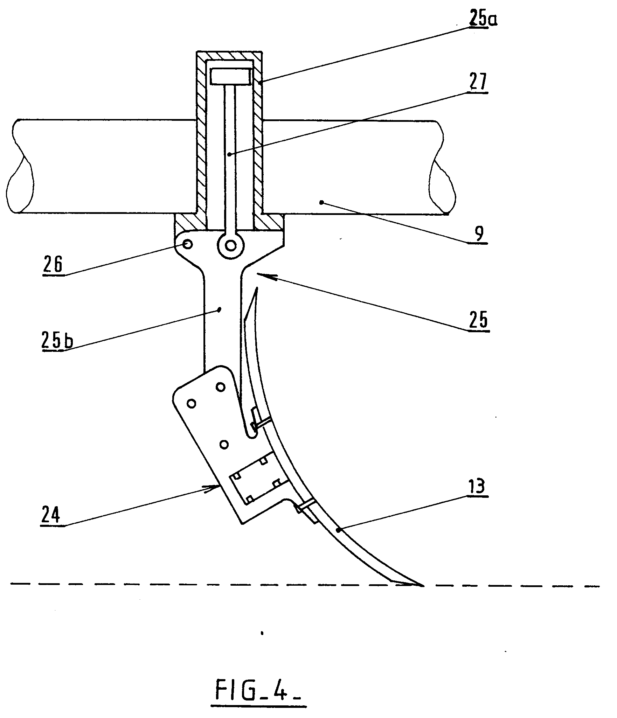

Les disques ou socs 12 (ou 13,14) sont montés escamotables par exemple à l'aide du dispositif représenté en figure 4 et qui sera décrit plus loin.

Dans une position des disques ou socs 12, représentés en traits pleins sur la figure 3, ceux-ci peuvent s'escamoter en cas d'obstacle, par basculement autour d'un axe symbolisé en 18 et, dans la position de reversibilité de la charrue, les disques ou socs 12, représentés en tiretés, peuvent s'escamoter par basculement autour d'un axe 18′ symétrique de l'axe 18 par rapport à l'arbre 9.

Lors de la course de l'arbre à vis crémaillère 9, il est possible de positionner les bords d'attaque d'équerre par rapport au sens d'avancement en sorte que les disques travaillants sont à 100 % de leur efficacité et projettent la terre d'avant en arrière.

Dans le mode de réalisation de la figure 3, l'entraînement du rotor 4 est du type chaîne, train de roulement des engins à chenilles ou chaîne trancheuse à galets autolubrifiés nécessitant peu d'entretien et transmettant des couples importants, ce qui permet de dégager sous la chaîne grâce à des gouges.

Sur la figure 2 on a représenté en option un rouleau plombeur ou une lame sous-soleuse 19, ainsi qu'un attelage supplémentaire 20, porté par le châssis de la charrue, pour monter derrière celle-ci un engin auxiliaire tel qu'un semoir par exemple.

La charrue se déplace suivant le sens de la flèche 21 et le rotor 4 est entraîné en rotation dans le sens indiqué par la flèche 22.

Avec une telle charrue il est impossible de bourrer malgré d'éventuels dépôts de végétation très importants tels que paille, jambe de maïs, roncier, rémanent forestier. Il est à noter que l'on peut jouer sur la longueur de coupe de tous les végétaux en faisant varier la vitesse de rotation du rotor 4 avec la vitesse d'avancement du tracteur.

Dans le cas de terre très sèche l'impact du tranchant sur le sol des outils agit comme un coup de hâche, sectionne la végétation et disloque la terre, assurant ainsi un mélange intime pour la décomposition et supprimant la semelle de labour.

Du fait de la libre rotation des outils 13,14 à l'extrémité de leurs bras, l'effet de patinage observé lors de labour classique avec charrue à soc ou à disque n'existe plus et on obtient une bien meilleure pénétration du sol.

En terre argileuse ou légèrement humide, le lissage des mottes est inexistant, la couche arable est vraiment préservée, le déplacement de la terre par les disques bombés crénelés 13 d'avant en arrière et latéral réalise un bon retournement de la terre, sans toutefois créer de lissage au fond du sillon ; la terre se trouve extirpée entre le niveau du sol et le fond du sillon.

La possibilité de modifier facilement l'orientation des disques bombés 13 par une simple action sur l'arbre-crémaillère 9, grâce aux vérins D,G, rend la charrue totalement et instantanément réversible.

De plus, la charrue peut être déportée latéralement par l'action du vérin G, cela permet au premier train de disques (12) de refermer le sillon juste derrière la roue du tracteur. Les roues de jauge (non représentées sur la figure 1) sont situées entre le tracteur et la charrue et suivent en même temps ce déplacement latéral, de ce fait une roue sur deux est toujours dans le sillon pour une meilleure stabilité latérale, la profondeur se trouvant alternée à chaque réversion.

Il est également possible avec une telle machine de butter des plantations (vergers, pépinières, fôrets) ou au contraire de faire des ados en permutant la moitié des disques d'un côté par rapport à l'autre, en sorte qu'il n'y a plus de réaction latérale. Dans le même passage on peut aussi adjoindre une planteuse pour réaliser des plantations d'arbres forestiers ou vergers en tous genres.

La version illustrée par la figure 2 permet le labour par très fort dévers. Les disques 14 sont lisses ou de forme étoilée et sont chargés en outre de trancher la végétation.

On peut également prévoir pour les très fortes pentes une pièce commandée par vérin (non représentée) faisant varier l'angle du rotor 4 et de l'ensemble machine (roues, coutres circulaires et lame de sous-solage) de quelques degrés en sorte que les coutres (14) automatiquement, à chaque révolution, s'appuient sur la terre lorsqu'ils y pénétrent et contrecarent la poussée de projection de terre dans le labour réversible.

La terre se trouve extirpée du front d'attaque entre le fond du sillon et le niveau du sol. La force centrifuge du rotor est neutralisée par la rotation des disques inverses qui donnent à la terre une force centripète. Ceci permet dans des travaux de profondeur importante de projeter les matériaux (terre, cailloux, pierres) et de les remonter vers la surface en faisant l'effet cascade d'un disque sur l'autre.

Une telle charrue peut réaliser des labours en courbe de niveau en travers de pente, ce qu'aucune charrue connue ne peut faire, permettant au tracteur de rouler dans le sillon, rattrapant ainsi son centre de gravité, la terre étant tournée vers le haut. Dans ce cas, des lames sous-soleuses vibrantes sont adjointes sur le rotor 4. Cette machine réalise dans le même passage un labour si l'on veut à plus de 30 cm de profondeur et le sous-sol est éclaté à 30 ou 40 cm en plus.

Un tel labour réalisé conjointement avec un sous-solage neutralisera l'érosion hydrique qui prédomine dans les pentes moyennes et accentuées. Le sol ainsi travaillé aura une capacité d'infiltration et de rétention lors de très forts orages.

La machine de la figure 2 peut être adaptée aux travaux publics en adjoignant une tôle cintrée 23 enveloppant le rotor 4 en continuité jusqu'au fond du soc transversal et fixée côté bras de relevage. Si le tracteur est équipé d'un poste réversible la machine peut être déplacée en marche arrière. La terre se trouve alors piégée à l'intérieur de la tôle cintrée 23. En inclinant les disques 13 la terre peut être projetée d'un côté ou de l'autre de la machine, le rotor 4 formant une vis sans fin et peut être reprise par un tapis roulant montant disposé à côté du tracteur.

Dans ce cas, il est possible de déplacer des quantités de terre très importantes et en continu, tout en réduisant la motte à la grosseur désirée, ceci dans des conditions très difficiles, par exemple sur terrains pierreux ou caillouteux. Les corps étrangers dans le sol se trouvent projetés du bas du sillon transversal vers le front d'attaque et vers la surface où ils trouvent aisément un dégagement. Il est très facile de cribler ces matériaux pour les récupérer pour empierrer les routes ou pour les concasser.

Les deux roues de jauge servent positivement pour le nivelage très précis, ainsi que l'inclinaison latérale, en sorte que le tracteur roule sur une piste sans ornière ni bosse.

Une telle machine convient très bien pour lever les banquettes sur le bord des routes, qui sont souvent source d'accident et empêchent l'écoulement de l'eau dans le fossé. La terre dans ce cas peut être chargée sur camion ou bien déversée par le tapis de l'autre côté du fossé tout en redonnant dans les virages un profil route banquette incliné ou presque à l'horizontale. L'ensemble, grâce au vérin G, permettant le déplacement latéral par rapport au tracteur trouve une autre application lorsqu'il y a des arbres, bornes, obstacles, etc... En effet, la machine s'écarte et se repositionne dès le passage. Toujours dans cette position on peut réaliser des passages transversaux à la pente tout en ayant le tracteur de niveau.

Pour réaliser des découvertes de gravières une telle machine excelle par sa rapidité de transport. Le déplacement de terre se fait par tapis roulant adjacent. Egalement l'agriculteur pourra, en adjoignant une telle tôle 23 et un tel tapis, moduler son terrain à sa guise et réaliser des oéprations telles que contournières dégagées, réfection des fossés d'écoulement, créaction de canaux pour lesquels il est possible après plusieurs passages d'engins de descendre à plus de deux mètres de profondeur. La machine permet aussi de réaliser, sans pelle hydraulique ni bulldozer, des retenues collinaires très importantes pour l'irrigation.

La machine de la figure 2 peut être simplifiée par suppression des coutres 14.

Le positionnement des disques (12,13) sur un même moyeu 10 peut être alterné, un disque tournant la terre d'un côté puis l'autre en sens inverse. A l'emplacement des coutres 14 il est possible de permuter ceux-ci par des disques identiques aux disques 13. Pour chaque moyeu 10 on a ainsi quatre disques qui déplacent la terre d'avant en arrière.

Avantageusement les disques (12,13) sont montés basculants et s'escamotent lors de la rencontre d'un obstacle. La figure 4 illustre un tel montage. Chaque disque 13 est monté amovible sur un support 24 à plusieurs positions de fixation sur un bras 25 lui-même porté par l'arbre 9 du rotor par l'intermédiaire d'un moyeu (non représenté).

Le bras 25 comprend une partie cylindrique 25a engagée dans un perçage d'un moyeu 10 du rotor (4,9) et une partie externe 25b portant le support 24 et articulée sur la partie 25a autour d'un axe 26 orthogonal à la fois à l'axe du rotor (4,9) et à l'axe du bras porte-outil (et correspondant aux axes 18 et 18′ de la figure 3).

La partie 25a est creuse et loge un vérin hydraulique 27, ou un ressort, amortisseur relié à la partie escamotable 25b.

Lorsque le disque 13 rencontre un obstacle, il peut s'effacer latéralement par rotation de l'ensemble 13-24-25b autour de l'axe 26 et revenir dans sa position initiale par l'effet de rappel automatique du vérin 27.

En baissant la pression dans les vérins 27 on peut permettre aux disques 13 d'extrémité de passer sous les deux plaques de bordure (3, 6 ; 15,16) du rotor, réalisant ainsi un effet décavaillonneur. Les disques reviennent à leur point initial dès la sortie de terre grâce à la pression du vérin et à une came de sécurité.

Les disques (12,13) peuvent être constitués par des pièces en forme d'étoile dont les extrémités reçoivent de manière amovible des pointes ou tranchants en carbure.

Suivant une variante de la charrue de l'invention, le rotor 4 peut être équipé entièrement de coutres circulaires 14 en vue d'effectuer des débroussaillages.

Suivant une autre variante, les outils de travail du rotor peuvent être constitués par des socs de labour torique à deux becs symétriques montés à l'extrémité de bras orientables comme les disques 13 et alignas tout autour du rotor suivant une hélice ou plusieurs hélices si chaque moyeu 10 porte plusieurs socs, ce type d'outils permettant un mélange homogène de la couche superficielle.

Enfin, l'invention n'est évidemment pas limitée aux modes de réalisation représentés et décrits ci-dessus, mais en couvre au contraire toutes les variantes couvertes par les revendications, c'est ainsi, par exemple, que des bras porte-outils pourraient être montés rotatifs autour d'un axe orthogonal à l'axe du rotor en sorte de placer l'outil de travail dans une position symétrique mais inverse par rapport à la direction de déplacement de la charrue, sous l'action d'un système de commande de basculement approprié actionné à partir de la cabine du tracteur.

## Revendications

1. Charrue rotative polyvalente comprenant un arbre ou rotor (4) portant des outils (12,13,14) constitués par des organes tranchants ou à pointe, mû à partir de l'engin tracteur, disposé transversalement à la direction d'avancement dudit engin et supporté par un chassis télescopique (1,2,5), caractérisé en ce que les outils (12,13) sont montés amovibles à l'extrémité de tiges (11a) réglables en position et montées rotatives autour de leur axe dans des moyeux (10) solidaires du rotor (4) à des fins de réversibilité de la charrue, lesdites tiges (11a) portant un filetage coopérant avec un arbre-vis (9) coaxial au rotor (4) et dont un déplacement est commandé par un flasque (6,16) appartenant au châssis télescopique (1,2,5), ledit flasque étant fixé à l'une des extrémités de l'arbre-vis (9) et mobile suivant une direction parallèle à l'arbre du rotor (4) à l'aide de vérins appropriés (D,G).

2. Charrue suivant la revendication 1, caractérisée en ce que le rotor (4) comporte un nombre quelconque de moyeux (10) individuels solidarisés les uns des autres et portant chacun au moins une tige (11a).

3. Charrue suivant la revendication 2, caractérisée en ce que les tiges (11a) sont montés escamotables par un montage en deux parties dont l'une (25a) est solidaire du moyeu (10) et dont l'autre (25b), portant l'outil (13), est articulée sur la première partie (25a) autour d'un axe orthogonal aux axes de la tige et du rotor (4), un système de rappel élastique (27) étant prévu pour ramener l'outil dans sa position de travail.

4. Charrue suivant la revendication 3, caractérisée en ce que ledit système de rappel élastique est constitué par un vérin hydraulique (27) dont la pression est réglable.

5. Charrue suivant l'une des revendications 1 à 4, caractérisée en ce que chaque moyeu (10) porte deux disques bombés crénelés (13) ou analogues, diamétralement opposés et montés rotatifs sur les tiges (11a) orientables.

6. Charrue suivant la revendication 5, caractérisée en ce que chaque moyeu (10) porte, en outre, deux coutres circulaires (14) montés rotatifs et diamétralement opposés sur des bras (11b) montés fixes mais de manière amovible sur ledit moyeu (10).

7. Charrue suivant l'une des revendications 1 à 6, caractérisée en ce que l'ensemble rotor (4)-outils (12) est monté réglable transversalement à l'aide de vérins (D,G) perpendiculaires au sens de déplacement de la charrue.

## Claims

1. Multi-purpose rotary plough comprising a shaft or rotor (4) carrying tools (12, 13, 14) consisting of cutting or tipped devices, driven from the tractor vehicle, disposed transversely to the direction of travel of the said vehicle and supported by a telescopic frame (1, 2, 5), characterised in that the tools (12, 13) are mounted removably at the end of rods (11a) which are adjustable in position and are mounted so as to rotate about their axis in hubs (10) fixed to the rotor (4) for the purpose of affording reversibility of the plough, the said rods (11a) bearing a thread interacting with a screwed shaft (9) coaxial with the rotor (4) and a movement of which is actuated by a plate (6, 16) forming part of the telescopic frame (1, 2, 5), the said plate being fixed to one end of the screwed shaft (9) and being movable in a direction parallel to the shaft of the rotor (4) by means of suitable jacks (D, G).

2. Plough according to Claim 1, characterised in that the rotor (4) has any number of individual hubs (10) fixed to each other and each carrying at least one rod (11a).

3. Plough according to Claim 2, characterised in that the rods (11a) are mounted retractably by a two-part mounting, one part (25a) of which is fixed to the hub (10) and the other part (25b) of which, carrying the tool (13), is articulated on the first part (25a) about an axis orthogonal to the axes of the rod and rotor (4), an elastic return system (27) being provided to return the tool to its working position.

4. Plough according to Claim 3, characterised in that the said elastic return system is formed by a hydraulic jack (27), the pressure of which is adjustable.

5. Plough according to one of Claims 1 to 4, characterised in that each hub (10) carries two notched curved discs (13) or similar, diametrically opposed and mounted so as to rotate on the orientable rods (11a).

6. Plough according to Claim 5, characterised in that each hub (10) also carries two circular coulters (14) mounted rotatably and diametrically opposed on arms (llb) mounted fixed but removably on the said hub (10).

7. Plough according to one of Claims 1 to 6, characterised in that the rotor (4) / tools (12) assembly is mounted so as to be adjustable transversely by means of jacks (D, G) at right angles to the direction of movement of the plough.

## Patentansprüche

1. Mehrzweckscheibenpflug umfassend eine Welle oder einen Rotor (4), die bzw. der Werkzeuge (12, 13, 14) trägt, die durch schneidende oder spitzige Organe gebildet werden, von dem Zugfahrzeug aus bewegt, quer zur Bewegungsrichtung des besagten Zugfahrzeugs angeordnet und von einem Teleskopchassis (1, 2, 5) getragen wird, dadurch **gekenn****zeichnet,** daß die Werkzeuge (12, 13) lösbar am Ende von Stangen (11a) montiert sind, die in ihrer Position einstellbar und um ihre Achse drehbar in Naben (10) montiert sind, die zu Zwecken der Reversibilität des Pflugs fest mit dem Rotor (4) verbunden sind, wobei besagte Stangen (11a) ein Gewinde tragen, das mit einer koaxial zum Rotor (4) verlaufenden Schraubspindel (9) zusammenarbeitet, deren Verschiebung durch einen zum Telekopchassi-s (1, 2 5) gehörigen Flansch (6, 16) gesteuert wird, wobei besagter Flansch an einem der Enden der Schraubspindel (9) befestigt und in einer Richtung parallel zur Welle des Rotors (4) mittels geeigneter Zylinder (D, G) beweglich ist.

2. Pflug gemäß Anspruch 1, dadurch gekennzeichnet, daß der Rotor (4) irgendeine Anzahl von individuellen Naben (10) trägt, die aneinander befestigt sind und jeweils wenigstens eine Stange (11a) tragen.

3. Pflug gemäß Anspruch 2, dadurch gekennzeichnet, daß die Stangen (11a) durch eine Montage in zwei Abschnitten einziehbar sind, von denen ein Abschnitt (25a) fest mit der Nabe (10) befestigt und von denen der andere Abschnitt (25b), der das Werkzeug (13) trägt, an dem ersten Abschnitt (25a) um eine Achse senkrecht zu den Achsen der Stange und des Rotors (4) schwenkbar ist, wobei ein elastisches Rückstellsystem (27) vorgesehen ist, um das Werkzeug in seine Arbeitsposition zurückzubringen.

4. Pflug gemäß Anspruch 3, dadurch gekennzeichnet, daß besagtes elastisches Rückstellsystem durch einen Hydraulikzylinder (27) gebildet wird, dessen Druck regelbar ist.

5. Pflug gemäß einem der Ansprüche 1 bis 4, dadurch gekennzeichnet, daß jede Nabe (10) zwei bombierte gezahnte Scheiben (13) od. dgl. trägt, die einander gegenüberstehend angeordnet und drehbar auf den einstellbaren Stangen (11a) montiert sind.

6. Pflug gemäß Anspruch 5, dadurch gekennzeichnet, daß jede Nabe (10) zudem zwei Rundseche (14) trägt, die drehbar und diametral gegenüberliegend zu den Armen (11b) montiert sind sowie fest, aber lösbar auf besagter Nabe (10) montiert sind.

7. Pflug gemäß einem der Ansprüche 1 bis 6, dadurch gekennzeichnet, daß die Gesamtheit von Rotor (4) und Werkzeugen (12) transversal mittels Zylinder (D, G) einstellbar senkrecht zur Bewegungsrichtung des Pflugs montiert ist.
